# EUROPEAN PATENT APPLICATION

(11) **EP 0 781 616 A1**
(43) Date of publication of application: **02.07.1997**
(21) Application number: 96309296.0
(22) Date of filing: 19.12.1996
(51) Int. Cl.: B23B 31/20

(54) **Collet**

(30) Priority: 28.12.1995 JP 343533/95
(71) Applicant: DAISHOWA SEIKI KABUSHIKI KAISHA, Higashi Osaka Osaka (JP)
(72) Inventor: Komine, Tsuyoshi, c/o Daishowa Seiki, Higashiosaka, Osaka (JP); Yasuda, Takeshi, c/o Daishowa Seiki, Higashiosaka, Osaka (JP)
(74) Representative: Jenkins, Peter David

(57) **Abstract**

The present invention provides a collet (10) which prevents stoppers (24) or seals from slipping in the radial direction of the collet.

The collet (10) which comprises slittings (16) which open on the top end side of the collet body along its axial direction, and stoppers (24) or seals which are provided between the wall surfaces of the slittings (16) and extend in the radial direction of the collet body. Engaging means are provided on the wall surfaces of the slittings to prevent the stoppers or seals from moving in the radial direction of the collet body.

## Description

The present invention relates to a collet which holds tools used on machine tools.

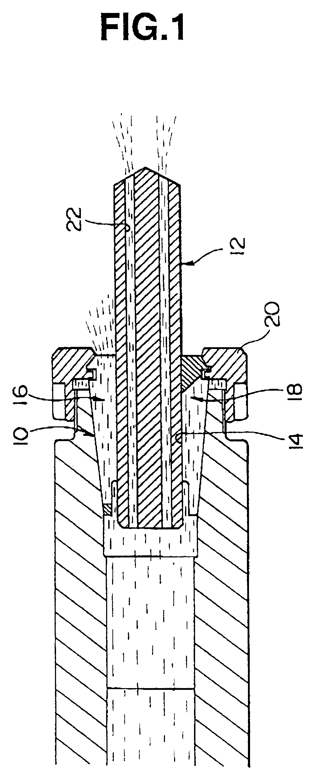

A collet has been conventionally used on machine tools such as lathes, drilling machines or milling machines as a tool for holding tools such as drills or end mills. A collet comprises, as shown in Figure 1, for example, a collet body 10, a holding hole 14 for holding a tool 12, slittings 16 which opens on the top end side of the collet body 10, slittings 18 which opens on the base end side of the collet body 10, and a nut 20 which holds the tool 12 by applying pressure to the surface of the outside periphery of the collet body 10 and contracting the internal radius of the holding hole 14 as it rotates.

When processing a work piece by using these tools 12, it is necessary to continuously lower the heat which is generated by such processing. This cooling method includes, for example, a method of cooling the tool 12 by providing penetrating holes 22, which extend in a longitudinal direction in the tool 12 as shown in Figure 1, and by making a liquid coolant pass through the penetrating holes 22.

The slittings 16 described above are formed on the top end side of the collet body 10. Therefore, the above-mentioned cooling method creates a problem in that the coolant outflows through the slittings 16, and the coolant cannot be sufficiently flushed through the penetrating holes 22 of the tool 12 (the current of the coolant is shown as dotted lines). Accordingly, there is a problem that the tool 12 cannot be cooled sufficiently.

In order to solve this problem, there is a prior art example described in Japanese Patent Publication (Kokoku) No. HEI 7-10444. In particular, as shown in Figures 2 and 3, some embodiments of this invention are designed to prevent the cooling agent from outflowing from the slittings 16 by placing stoppers 24 which extend in the radial direction of the collet body 10.

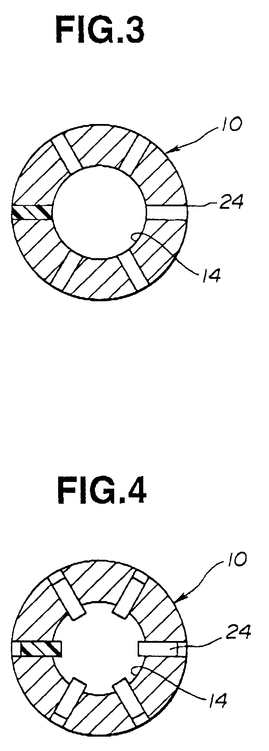

However, the collet described in this official gazette has the problem that if the range of extension or contraction of the collet is wide, the stoppers 24, as shown in Figure 4, slip in the radial direction of the collet body 10 upon extension or contraction movements of the collet, and a part of the stoppers 24 protrudes into the holding hole 14. As a consequence, the axis is displaced from its original position by this protruding part, which precludes precise processing.

The present invention aims to provide a collet which prevents stoppers from slipping in the radial direction of the collet.

In order to achieve this aim the present invention provides a collet which comprises slittings which open on the top end side of the collet body along its axial direction, and stoppers which are provided between the wall surfaces of the slittings and extend in the radial direction of the collet body. Engaging means are provided on the wall surfaces of the slittings to prevent the stoppers from moving in the radial direction of the collet body.

The engaging means may be composed of concave parts and convex parts which are formed on the wall surfaces of the slittings.

Grooves which define space for receiving the stopper may be formed on the wall surfaces of the slittings, and the engaging means may be formed on the inside periphery of the grooves.

The stoppers may be composed of elastic materials and the stopper bites in the concave parts and convex parts, thereby being capable of preventing itself from moving in the radial direction of the collet body.

Gaps may be formed between the bottom face of the concave parts of the concave shapes and convex shapes and the outer most edge of the stoppers which bites into the concave parts.

The space defined by the groove may be formed in an approximate cylindrical shape which extends in the radial direction of the collet body, and the stoppers may be formed in poles which extend in the radial direction of the collet body.

On the stoppers may be formed a convex part which protrudes from the space defined by each of the grooves in the axial direction of the collet body, and which fluid-tightly contacts both wall surfaces, except the grooves of the slittings.

Embodiments of the present invention will now he described by way of example only with reference to the accompanying drawings, in which:-
Figure 1 is a cross sectional view of a conventional collet being mounted on a chuck.

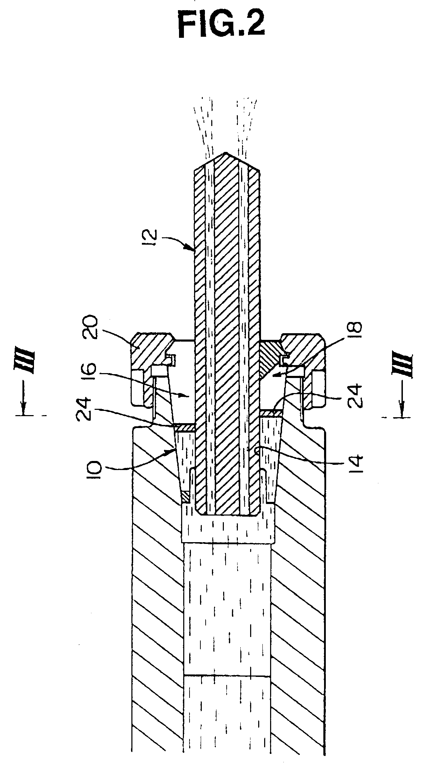

Figure 2 is a cross sectional view of a conventional collet being mounted on a chuck.
Figure 3 is a cross sectional view of the collet taken along line III-III of Figure 2.
Figure 4 shows the collet in Figure 3 as its internal diameter is contracted.
Figure 5 is the front view of the collet of one embodiment of the present invention.
Figure 6 is a cross sectional view of the collet taken along line A-O-B in Figure 5.
Figure 7 shows the collet in Figure 6 being mounted on a chuck.
Figure 8 is an enlarged view of the stoppers of the collet shown in Figure 6, and their surroundings.
Figure 9 is a cross sectional view of the stoppers and their surroundings taken along line VX-VX in Figure 8.
Figure 10 is an enlarged view of the gaps of the collet shown in Figure 9, and their surroundings.
Figure 11 shows the stoppers and grooves of the collet according to another embodiment of this invention, and corresponds to Figure 8.
Figure 12 shows the stoppers and the grooves of the collet according to another embodiment of this invention, and corresponds to Figure 9.
Figure 13 shows the collet of another embodiment of this invention, a part being broken away.

Next, we will explain the preferred embodiments of the present invention by referring to the figures.

### (First Embodiment)

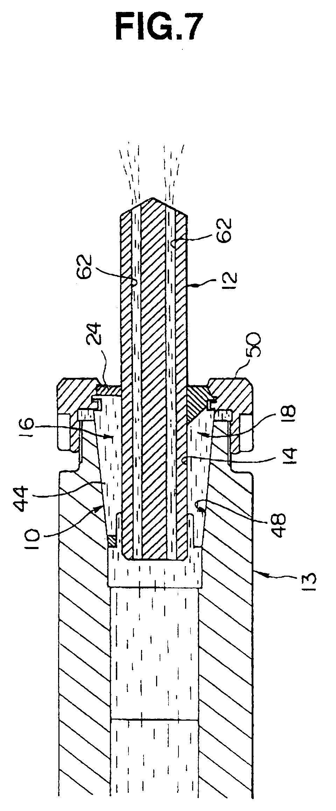

In the first embodiment, a tool 12 is used which has two penetrating holes 62 inside, extending in the longitudinal direction, and this tool 12 includes a structure of self-cooling by making the coolant (shown by dashed lines in Figure 7) pass through penetrating holes 62.

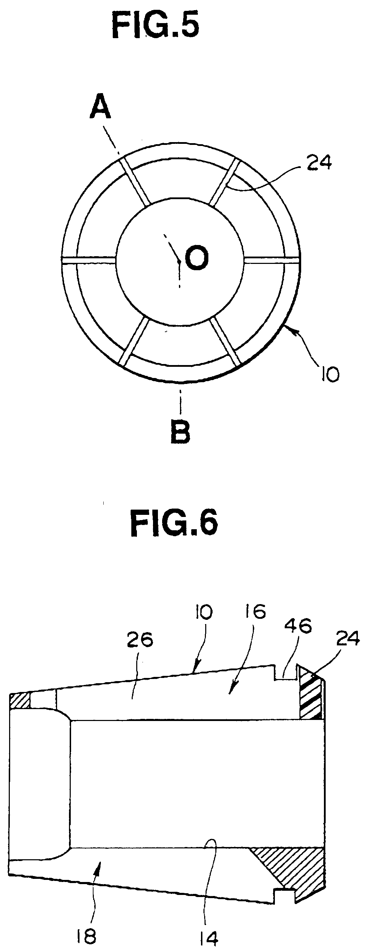

As shown in Figures 5 through 7, the collet of the first embodiment has a collet body 10, a cylindrical-shaped holding hole 14 for holding the tool 12 such as drills or end mills, top end slittings 16 which are provided on the top end side of the collet body 10 along its axial direction (the right side of Figure 6), and a base end slitting 18 which are provided on the base end side of the collet body 10 along its axial direction (the left side of Figure 6).

The top end slittings 16 and the base end slittings 18 are respectively and alternately placed at regular intervals along the circumference of the collet body 10. As shown in Figures 6 through 8, on the wall surface 26 which is near the end and which faces the top end slittings 16, grooves 28 extending in the radial direction of the collet body are formed respectively along the full length of the wall surface 26 in the radial direction of the collet body 10. These grooves 28, which are formed facing each other, define a cylindrical space to receive stoppers 24 described below. A pair of grooves 28 facing each other define the space, and they are located at a certain distance, which is different from that of another pair of grooves 28. This prevents the collet from getting weak in a specific position.

Concave parts and convex parts with serrated cross sections and which extend along the circumference of the grooves 28 are formed on each inside wall surface 30 of these grooves 28. In the space defined by the grooves 28, the stoppers 24 which are formed in cylindrical shapes are inserted alone the full length of the grooves 28 in the radial direction of the collet body 10. These stoppers 24 are composed of elastic materials such as synthetic resin or rubber. After the stoppers 24 are inserted into the above-described space, the dimension of the above-described space and the stoppers 24 are determined so that the concave parts and convex parts of the grooves 28 with serrated cross sections will bite into an outside periphery 34 of the stoppers 24. Since the stoppers 24 stop the coolant which cools the tool 12 in this structure, the outflowing of the coolant to the outside through the top end slittings 16 can be prevented. Furthermore, since the outside periphery 34 of the stoppers 24 bite into the concave parts and convex parts on the inside periphery 30 of the grooves 28 formed on the wall surface 26 of the top end slitting 16, the stoppers 24 will not slip in the radial direction of the collet body 10 even if the range of extension or contraction of the collet is wide. For this reason, it is possible to prevent, for example, a part of the stoppers 24 from protruding from the holding hole 14, thereby causing the axis of the tool 12 to shift, as in the prior art.

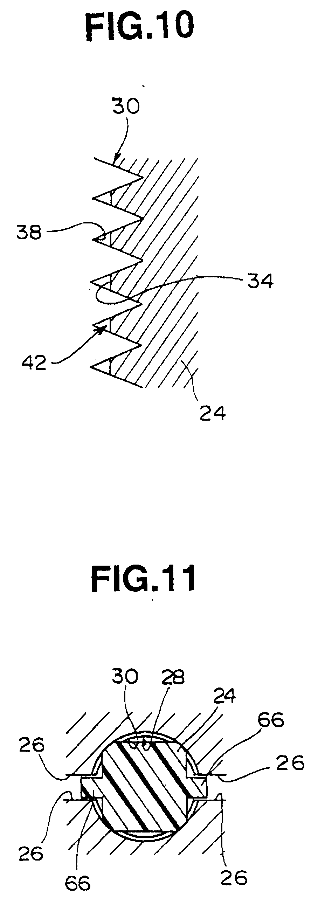

Of the concave parts and convex parts of the inside wall surfaces 30 of the grooves 28, gaps 42 are formed between a bottom face 38 of the concave parts and the outer most part of the outside periphery 34 of the stoppers 24, as shown in Figure 10. The existence of these gaps 42 enable the elastic deformation of the stoppers 24, so that the stoppers 24 can escape into the gaps 42 even if the width of the top end slittings 16 shrink, that is, if the holding hole 14 of the collet contracts. Therefore, upheaval of the stoppers 24 outside or inside in the radial direction can be prevented.

Moreover, as shown in Figure 7, the reference numeral 13 is a chuck which has an inserting hole 48 into which the collet body 10 is to be inserted, and a nut 50 which by rotating itself contracts the outside periphery 44 of the collet body 10 and which contracts the radius of the collet body 10.

### (The Second Embodiment)

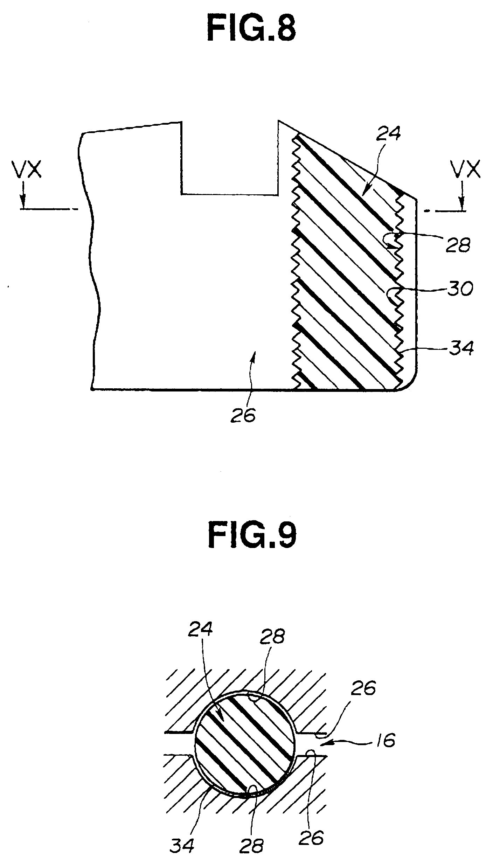

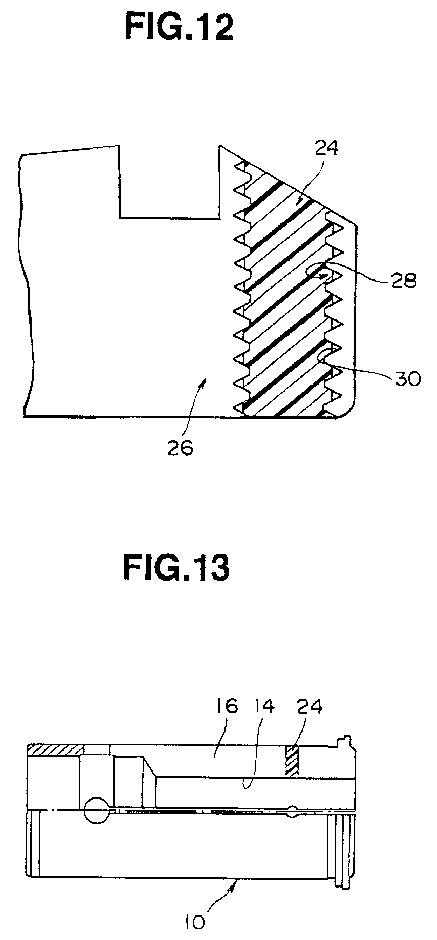

Figures 11 and 12 show another embodiment of the stoppers 24 and the grooves 28, and respectively correspond to Figures 8 and 9. Only the differences between the first embodiment of the stoppers 24 and the grooves 28 will be explained below.

Although like the collet explained in the first embodiment, concave parts and convex parts are formed on the inside wall surfaces 30 of the grooves 28, the concave parts and convex parts of this second embodiment are different from the first embodiment in that they are formed as thread grooves. In addition, the stoppers 24 are formed in poles with approximate square cross-section.

Moreover, on the side walls of the collet body 10 of the stoppers 24, in the axial direction of the collet body are respectively formed convex parts 66 which protrude into the axial direction of the collet body 10 from the space defined by each of the grooves 28. The cross section, which is perpendicular to the axial direction of the collet body 10 of the convex parts 66, is shaped to be a similar or somewhat larger area as or than the cross section of the top end slittings 16. Therefore, the convex parts 66 closely contact in their full length with both wall surfaces 26 of the top end slittings 16, in the radial direction of the collet body 10.

Thus, since convex parts 66 are formed so that they closely contact in their full length with both wall surfaces 26 of the top end slittings 16, in the radial direction of collet body, it is possible to prevent the stoppers 24 in poles with approximate square cross-section from rotating themselves around their axes because of the convex parts 66, and the coolant from outflowing from the slittings 16 on the top end side. Therefore, the outflowing of the coolant through the slittings 16 on the top end side can surely be prevented, even if there are large gaps between the outside periphery 34 of the stoppers 24 and the inside wall surfaces 30, especially as in the second embodiment.

Moreover, by forming the stoppers 24 in rectangular prism shapes, which are different shapes from the semicircle-shaped grooves 28, it is possible to enlarge the space for the stoppers 24 to escape, and thereby surely prevent the stoppers 24 from transforming in the radial direction of the collet body 10.

Furthermore, the present invention is not limited to the embodiments as described above, but can also be applied to straight collets, for example, as shown in Figure 13. Unlike spring collets, there are only top end collets in the straight collets.

## Claims

1. A collet, comprising:
slittings which are provided on the top end side of the collet in the axial direction of a collet body;
stoppers which are provided between wall surfaces of said slittings and which extend in the radial direction of said collet body; and
engaging means provided on the wall surfaces of said slittings for preventing said stoppers from moving in the radial direction of said collet body.

2. A collet according to Claim 1, wherein said engaging means consists of concave parts and convex parts which are formed on the wall surfaces of said slittings.

3. A collet according to Claim 1, wherein a groove which defines the space to receive said stopper is formed on the wall surfaces of said slitting, and said engaging means is formed on the inside periphery of said groove.

4. A collet according to Claim 3, wherein said stoppers are composed of elastic materials, and said stoppers prevent the collet body from moving in the radial direction of the collet body by biting into said concave parts and convex parts.

5. A collet according to Claim 4, wherein a gap is formed between the bottom surface of the concave part of said concave parts and convex parts and the outer most edge of the stoppers biting into said concave part.

6. A collet according to Claim 3, wherein the space defined by said groove is farmed in a pole shape which extends in the radial direction of said collet body, and wherein said stopper is formed in a pole shape which extends in the radial direction of said collet body.

7. A collet according to Claim 5 or Claim 6, wherein convex parts are formed, which fluid-tightly contact both wall surfaces, except said grooves, of said slittings and which protrude in the axial direction of said collet body from the space defined by said respective grooves.
